# EUROPÄISCHE PATENTSCHRIFT

(11) **EP 2 317 409 B1**
(45) Veröffentlichungstag und Bekanntmachung des Hinweises auf die Patenterteilung: **05.12.2012**
(21) Anmeldenummer: 09174497.9
(22) Anmeldetag: 29.10.2009
(51) Int. Cl.: G05B 19/042, G05B 19/418

(54) **Vorrichtung und Verfahren zum Betrieb eines Feldgerätes mit integriertem Bildverarbeitungsmodul**
Device and method for operating a field device with integrated image processing module
Dispositif et procédé pour un appareil de terrain avec un module de traitement d' images integré

(43) Veröffentlichungstag der Anmeldung: 04.05.2011
(73) Patentinhaber: VEGA Grieshaber KG, 77709 Wolfach (DE)
(72) Erfinder: Isenmann, Andreas, 77716 Haslach (DE); Allgaier, Volker, 77716 Haslach (DE)
(74) Vertreter: Maiwald Patentanwalts GmbH

(56) Entgegenhaltungen:
- EP-A2- 1 445 673
- WO-A1-2005/124485
- DE-A1-102004 055 318

## Beschreibung

### GEBIET DER ERFINDUNG

Diese Erfindung betrifft das Gebiet der Prozesssteuerung und -überwachung. Insbesondere betrifft die Erfindung ein Steuermodul für ein Feldgerät, das Feldgerät, ein Prozessüberwachungssystem, ein Verfahren zum Steuern eines Feldgeräts, ein Programmelement und ein computerlesbares Medium.

### HINTERGRUND DER ERFINDUNG

Prozessüberwachungs- und -steuerungssysteme, die zur Überwachung und/oder Steuerung von technischen Anlagen dienen, beispielsweise in so unterschiedlichen Bereichen wie der Lebensmitteltechnik, dem Aufbereiten von Erdöl oder Herstellung von Kunststoffen, umfassen in der Regel eine Mehrzahl von Feldgeräten. Die Feldgeräte können einerseits zum Messen verschiedener Prozessgrößen, wie Füllstand, Grenzstand, Druck, Durchfluss oder Temperatur eingerichtet sein aber auch andererseits zum Weiterleiten und Verarbeiten der gemessenen Daten, z. B. an eine zentrale Überwachungseinheit, dienen. Die Feldgeräte zum Messen von Prozessgrößen sind dabei in der Regel in der Nähe der zu überwachenden Komponente der technischen Anlage, wie beispielsweise einem Tank, bei dem der Füllstand bestimmt werden soll oder einer Leitung, bei der der Durchfluss gemessen werden soll, angeordnet. Weitere Feldgeräte, die mit den messenden Feldgeräten zur Kommunikation über Leitungen oder andere Medien, wie beispielsweise über Funk, verbunden sind, können an beliebigen anderen Orten der technischen Anlage angeordnet sein.

Darüber hinaus ist es auch möglich, dass die Feldgeräte nicht mit einem zentralen Überwachungssystem verbunden sind, sondern das ein Feldgerät mit einem weiteren Feldgerät in der Form eines Aktuators, der beispielsweise über die vom Feldgerät ermittelten Messwerte ein Steuerglied der technischen Anlage einstellen kann, verbunden ist. Insbesondere bei derartigen Messgeräten kann sich eine Ferndiagnose oder Fernwartung oft schwierig oder sogar unmöglich gestalten.

Bei der Wartung der Feldgeräte, beispielsweise wenn ein Fehler innerhalb eines Feldgeräts aufgetreten ist oder das Feldgerät auf ein fehlerloses Funktionieren überprüft werden soll, liest häufig ein Servicetechniker Prozessdaten aus einem Feldgerät aus, über die er den Funktionsstatus des jeweiligen Feldgeräts interpretieren kann. Beispielsweise kann ein Servicetechniker anhand einer Echokurve eines mit Radar betriebenen Füllstandmessgeräts ermitteln, ob der Radarsensor und die verarbeitende Elektronik korrekt arbeiten.

Um die aus einem Feldgerät ausgelesenen Prozessdaten interpretieren und visualisieren zu können, benötigt ein Servicetechniker normalerweise eine spezielle Auswerteeinheit, beispielsweise einen tragbaren Computer oder Rechner, auf dem spezielle Software installiert ist. Beispielsweise, wenn Daten, die in Form von Zahlenwerten vom Feldgerät zu der Auswerteeinheit übermittelt werden, grafisch aufbereitet werden sollen, ist es hilfreich, wenn die Auswerteeinheit Kenntnis darüber hat, welche Bedeutung diesen Zahlenwerten zukommt. Daher wird in der regel zur Visualisierung dieser Daten eine spezielle Software benötigt. Diese Software muss unter Umständen auch für verschiedene Feldgeräte und verschiedene Auswerteeinheiten zur Verfügung gestellt werden.

Die Anforderungen an eine Software, die auf einem Laptop installierbar ist, sind anders, als die Anforderungen die beispielsweise für Software auf einem Mobiltelefon oder einem PDA (Personal Digital Assistant bzw. persönlicher digitaler Assistent) gegeben sind.

Ändert sich der Aufbau oder die Konfiguration des Feldgeräts oder die Bedeutung der von einem Feldgerät abgegebenen Prozessdaten oder soll das Auslesen der Zahlenwerte mit einem Gerät erfolgen, für das noch keine speziell angepasste Auslesesoftware existiert, kann dies zu einem hohen Wartungsaufwand bezüglich der Auslesesoftware führen.

Die DE 10 2004 055 318 A1 beschreibt ein Feldgerät mit einer Kamera, die optische Umgebungsinformationen, wie etwa den Füllstand einer Flüssigkeit in einem Behälter, die Farbe der Flüssigkeit, die Schaumbildung an der Oberfläche der Flüssigkeit aber auch Handzeichen einer Bedienperson, erfassen kann. Darüber hinaus kann das Feldgerät die von der Kamera gelieferten Daten über einen Feldbus versenden.

Die EP 1 445 673 A2 betrifft ein System zur Web-basierten Darstellung von Automatisierungsprozessen. Das System umfasst eine erste Vorrichtung, die beispielsweise ein Automatisierungsgerät, beispielsweise ein Mixer oder ein Heizer (bzw. deren Steuerungsgerät) sein kann. Diese erste Vorrichtung stellt Daten bereit, die über eine Datenübertragungsvorrichtung an eine zweite Vorrichtung übertragen werden, bei der es sich um einen Client handeln kann. Die Daten werden mittels der zweiten Vorrichtung visualisiert und auch in der zweiten Vorrichtung in eine graphische Form gebracht.

Die WO 2005/124485 A1 betrifft ein Interface-Modul zwischen einem Steuergerät und einem Feldgerät. Das Interface-Modul ist dazu ausgeführt, Daten per E-Mail zu versenden.

### ZUSAMMENFASSUNG DER ERFINDUNG

Aufgabe der Erfindung ist es, die Kosten und den Aufwand, die für die Wartung von Feldgeräten notwendig sind, zu reduzieren.

Diese Aufgabe wird durch den Gegenstand der unabhängigen Ansprüche gelöst. Weitere Ausführungsformen der Erfindung ergeben sich aus den abhängigen Ansprüchen.

Ein Steuermodul für ein Feldgerät kann eine Vorrichtung sein, die mit einem Messgerät des Feldgeräts verbunden ist oder im Gehäuse des Feldgeräts angeordnet ist und/oder das dazu ausgeführt ist, das Feldgerät zu steuern oder optional Daten von dem Messgerät zu empfangen bzw. das Messgerät zu steuern. Beispielsweise kann das Steuermodul eine oder mehrere Platinen mit darauf angeordneten integrierten Schaltkreisen umfassen umfassen. Darüber hinaus kann das Steuermodul mechanisch mit dem Messgerät verbunden sein oder es kann in das Gehäuse des Messgeräts integriert sein. Es ist aber auch möglich, dass das Steuermodul ein eigenes Gehäuse aufweist und räumlich beabstandet zum Messgerät angeordnet ist. In diesem Fall kann das Steuermodul eine Kommunikationsleitung zur Datenkommunikation mit dem Messgerät aufweisen.

Ein Feldgerät kann jegliche Art von Vorrichtung sein, die Bestandteil eines Prozessüberwachungssystems ist. Beispielsweise kann ein Feldgerät zum Erfassen von Prozessgrößen, wie Füllstand, Grenzstand, Druck oder auch Temperatur dienen, beispielsweise zum Erfassen eines Füllstands oder Grenzstands in einem Tank oder eines Durchflusses in einer Leitung. Darüber hinaus gibt es auch Feldgeräte, die zum Versenden bzw. Empfangen dieser Prozessgrößen ausgeführt sind oder diese Prozessgrößen weiterverarbeiten oder aber auch Feldgeräte, die dazu ausgeführt sind, Aktuatoren, wie etwa Regler oder Ventile, des Prozesssteuerungssystems anzusteuern, um auf diese Weise die vom Prozessüberwachungssystem überwachte und gesteuerte technische Anlage zu steuern.

Das Steuermodul umfasst ein Bildverarbeitungsmodul, wobei das Bildverarbeitungsmodul dazu ausgeführt ist, aus Prozessdaten des Feldgeräts Bilddaten zu erzeugen. Mit anderen Worten umfasst das Steuermodul ein Bildverarbeitungsmodul, das in der Lage ist, aus den in Zahlenform vorliegenden Prozessdaten ein Bild zu erzeugen, das von einer entsprechenden Bildanzeigeeinheit derart angezeigt werden kann, dass ein Mensch die Daten direkt interpretieren kann.

Beispielsweise umfasst das Bildverarbeitungsmodul dazu zusätzliche Informationen darüber, wie die Prozessdaten des Feldgeräts interpretiert, visualisiert oder dargestellt werden sollen. Die Prozessdaten können also reine Zahlenwerte sein und die Bilddaten können Daten sein, die Informationen darüber enthalten, wie eine Grafik dargestellt werden soll, beispielsweise Pixelinformationen oder Vektoren einer Vektorgrafik.

Darüber hinaus ist es auch möglich, dass schon im Bildverarbeitungsmodul vorhandene (Roh-)Bilddaten mit den Prozessdaten angereichert werden. Beispielsweise ist im Bildverarbeitungsmodul bereits das Bild eines leeren Diagramms vorhanden, dass von dem Bildverarbeitungsmodul mit einer Grafik oder einer Kurve zusammengeführt wird, die durch die Prozessdaten parametriert sind. Mit anderen Worten ist das Bildverarbeitungsmodul dazu ausgeführt, Prozessdaten des Feldgeräts in Bilddaten zu kodieren oder in Bilddaten zu konvertieren. Die Prozessdaten können dann in den Bilddaten nicht mehr in der Form vorhanden sein, die besonders gut von einer Maschine interpretiert werden kann, sondern in einer Form, die von einem Anzeigegerät leicht dargestellt werden kann und die der menschlichen Interpretation besser zugänglich ist.

Das Steuermodul umfasst ein Sendemodul, wobei das Sendemodul dazu ausgeführt ist, die Bilddaten zu versenden. Insgesamt ist also das Steuermodul des Feldgeräts dazu ausgeführt, aus Prozessdaten des Feldgeräts Bilddaten zu erzeugen, die von einem entsprechenden Anzeigegerät ohne Kenntnis der Bedeutung der Prozessdaten oder deren Formats angezeigt werden kann.

Gemäß einer Ausführungsform der Erfindung umfassen die Prozessdaten einen Messwert, eine Echokurve und/oder Diagnosedaten des Feldgeräts oder des an das Feldgerät angeschlossenen Messgeräts. Beispielsweise kann das Steuermodul ein Messmodul umfassen, das zum Ansteuern des Messgeräts ausgeführt ist. Über dieses Messmodul kann das Steuermodul einen Messwert bzw. Messrohdaten des Messgeräts empfangen, aus denen dann der eigentliche Messwert durch das Messmodul berechnet wird. Beispielsweise kann das Messmodul eines Füllstandmessgeräts, das auf Basis von Radarechos oder Ultraschallechos arbeitet, die Werte einer Echokurve vom Messgerät empfangen, die die Messrohdaten darstellen und aus dieser Echokurve einen Füllstand, beispielsweise in einem Tank, berechnen, der dann den Messwert des Feldgeräts darstellt. Darüber hinaus können das Steuermodul und auch das Messgerät in der Regel verschiedene Diagnosedaten abgeben, die vom Bildverarbeitungsmodul in Bilddaten umgewandelt werden können.

Gemäß einer Ausführungsform der Erfindung ist das Bildverarbeitungsmodul dazu ausgeführt, die Bilddaten in einem Standardformat zu erzeugen oder die Bilddaten in ein Standardformat zu konvertieren oder umzuwandeln. Damit ist es ausreichend, dass das Empfangsgerät, das die Bilddaten empfängt, eine Grafik, die in einem Standardformat, wie beispielsweise JPG, BMP, TIFF, GIF oder PNG, erzeugt ist, darzustellen. Diese Fähigkeit ist bei vielen Empfangsgeräten bereits im Standardfunktionsumfang enthalten.

Gemäß einer Ausführungsform der Erfindung ist das Bildverarbeitungsmodul dazu ausgeführt, mit Prozessdaten ein Diagramm zu erzeugen. Mit anderen Worten können die Bilddaten ein Diagramm umfassen, das beispielsweise die grafische Anzeige von Werten mittels eines Balkendiagramms, eines Graphs und/oder einer Kurve umfassen kann. Wie bereits gesagt, kann dazu im Bildverarbeitungsmodul bereits ein leeres Diagramm, d. h. beispielsweise ein Diagramm, bei dem nur die Achsen und optional deren Beschriftung vorhanden sind, gespeichert sein, das dann mit einem durch bestimmte Prozessdaten parametrierten Diagramm angereichert bzw. zusammengeführt wird.

Insbesondere ist es möglich, dass das Bildverarbeitungsmodul eine Grafik in der Form einer Messwertkurve, beispielsweise einer Echokurve eines Füllstandsmessgeräts erzeugt.

Gemäß einer Ausführungsform der Erfindung ist das Bildverarbeitungsmodul dazu ausgeführt, aus Prozessdaten eine Grafik zu erzeugen, die eine Tabelle darstellt. Mit anderen Worten umfassen die Bilddaten eine Tabelle. D. h., die Bilddaten müssen nicht notwendigerweise eine Grafik umfassen, sondern können auch eine Tabelle umfassen, die als Grafik kodiert ist. Beispielsweise umfassen die Bilddaten nicht Prozessdaten als Zahlenwerte, sondern als die diese Zahlenwerte darstellende Pixel. Damit ist es möglich, dass ein Anzeigegerät, das in der Lage ist die Bilddaten zu verarbeiten und anzuzeigen, diese besonders leicht ohne weitere zusätzliche Informationen auf einem Anzeigegerät darstellen kann.

Darüber hinaus kann das Bildverarbeitungsmodul weitere zusätzliche Informationen enthalten, die eine bessere Interpretation der Werte in der Tabelle zulassen, wie beispielsweise Spalten- und Zeilenbeschriftungen.

Mit anderen Worten erzeugt das Bildverarbeitungsmodul keine Datentabelle, sondern ein Bild der Tabelle.

Gemäß einer Ausführungsform der Erfindung ist das Bildverarbeitungsmodul dazu ausgeführt, Bilddaten mit einer Auflösung zu erzeugen, die für ein Empfangsgerät optimiert ist. Dabei kann bei Bilddaten aus Pixeln mit dem Begriff Auflösung die Anzahl der Pixel in den Bilddaten gemeint sein.

Es ist möglich, dass das Steuergerät in Abhängigkeit des Empfangsgerätes und/oder der zu versendenden Nachricht Bilddaten in unterschiedlicher Größe, d. h. Auflösung, erzeugt. So können Bilddaten, die beispielsweise per E-Mail an einen Rechner versendet werden, eine typische Größe von 1024 x 768 Pixel aufweisen, was einer gängigen Auflösung entspricht. Das Steuergerät kann aber auch Bilddaten einer kleineren Auflösung, beispielsweise für den Versand per MMS, erzeugen, die beispielsweise nur eine Größe von 300 x 200 Pixel aufweist. Für die Erzeugung von Bilddaten in unterschiedlichen Größen kann es folgende Gründe geben: Zum Einen kann die Größe der Bilddaten gleich auf die Größe einer Anzeige des Empfangsgeräts angepasst sein und zum Anderen können kleinere Bilddaten schneller und/oder kostengünstiger versendet werden.

Gemäß einer Ausführungsform der Erfindung ist das Bildverarbeitungsmodul dazu ausgeführt, Bilddaten mit unterschiedlichen Auflösungen zu erzeugen.

Erfindungsgemäß umfasst das Sendemodul einen Internet-Client. Beispielsweise ist es möglich, dass das Feldgerät mit anderen Feldgeräten und einem Empfangsgerät über das Internetprotokoll kommunizieren kann. Mittels des Internet-Client des Sendemoduls können dann nicht nur die Bilddaten, sondern auch die Prozessdaten, wie beispielsweise die Messrohdaten, die Diagnosedaten und der Messwert des Feldgeräts, an die anderen Feldgeräte übertragen werden.

Erfindungsgemäß ist das Sendemodul dazu ausgeführt, die Bilddaten in eine E-Mail zu kodieren, wobei das Sendemodul dazu ausgeführt ist, die E-Mail zu versenden. Die Bilddaten werden als Anhang an die E-Mail angehängt werden. So ist es beispielsweise möglich, dass im Steuermodul bzw. im Sendemodul eine bestimmte E-Mail-Adresse vorgegeben ist, an die die E-Mail verschickt werden soll. Auf diese Weise können beispielsweise in regelmäßigen Abständen die vom Bildverarbeitungsmodul erzeugten Bilder an einen bestimmten E-Mail-Empfänger gesendet werden.

Gemäß einer Ausführungsform der Erfindung umfasst das Sendemodul einen Sender für ein mobiles Funknetz. Das Sendemodul kann ein Mobiltelefon umfassen, das beispielsweise in das Steuermodul integriert ist. Beispielsweise kann das Steuermodul ein Funkmodul mit einer SIM-Karte umfassen, das wie ein normales Mobilfunkgerät mit anderen Teilnehmern des Mobilfunknetzes kommunizieren kann. Die meisten mobilen Funknetze lassen heutzutage auch das Übertragen digitaler Daten zu. Auch ist es möglich über das mobile Funknetz eine Internetverbindung aufzubauen. Überdies gibt es über diese Möglichkeit hinaus noch weitere Möglichkeiten, Daten über mobile Funknetze zu senden.

Gemäß einer Ausführungsform der Erfindung ist das Sendemodul dazu ausgeführt, die Bilddaten in eine Nachricht zu kodieren, wobei das Sendemodul dazu ausgeführt ist, die Nachricht zu versenden. Eine derartige Nachricht kann z. B. eine sog. MMS (Multimedia Messaging Service) sein. Mit anderen Worten kann das Bild oder die Bilddaten in die MMS kodiert bzw. als Anhang der MMS ausgestaltet sein.

Es ist also möglich, dass das Steuergerät bzw. das Feldgerät durch das Steuergerät aus zu versendenden Prozessdaten zunächst eine Grafik, beispielsweise in einem Standardformat, wie JPG, BMP, TIFF, GIF oder PNG, erzeugt und diese Grafik dann als E-Mail oder MMS an einen Empfänger verschickt. Der Empfänger bzw. das Empfangsgerät kann beispielsweise ein Laptop (mobiler Rechner), ein PDA oder ein Mobiltelefon eines Servicetechnikers sein, der die Prozessdaten mittels der entsprechenden Grafik aus dem Feldgerät abruft. Beispielsweise kann der im Sensor vorhandene Messwertspeicher in eine Messwertkurve umgewandelt oder die Echokurve des Feldgeräts als Grafik direkt an ein Mobiltelefon versendet werden und dort ohne zusätzliche Software visualisiert werden, wenn die erzeugte Grafik ein Standardformat aufweist, das von der Software des Mobiltelefons verarbeitet werden kann.

Gemäß einer Ausführungsform der Erfindung ist das Steuermodul dazu ausgeführt, die Bilddaten auf Anforderung eines Empfangsgeräts zu erzeugen und zu senden. Mit diesem sog. Pull-Betrieb, z. B. durch Anfrage per E-Mail oder per MMS, von einem Rechner oder allgemein von einem Empfangsgerät aus, z. B. eines PDA oder eines Mobiltelefons, werden die Bilddaten auf Anfrage erzeugt.

Beispielsweise kann das Feldgerät bzw. das Steuermodul eine E-Mail-Adresse aufweisen und ein Servicetechniker eine E-Mail-Nachricht über seinen Laptop an das Steuermodul bzw. das Feldgerät mit dieser E-Mail-Adresse schicken, wobei in der E-Mail eine spezielle Grafik, beispielsweise bestimmte Diagnosedaten oder eine bestimmte Messwertkurve, angefragt wird. Nach Erhalt der E-Mail wertet das Steuermodul die E-Mail aus, beispielsweise kann die E-Mail ein bestimmtes Kommando enthalten, das vom Steuermodul interpretiert werden kann, und erzeugt dann in Reaktion auf die Anfrage per E-Mail die gewünschten Bilddaten und schickt diese dann per E-Mail an die E-Mail-Adresse, von der die Anfrage abgeschickt wurde.

In analoger Weise ist auch eine Anfrage über ein PDA oder Mobiltelefon möglich, wobei vom PDA oder Mobiltelefon aus eine SMS oder MMS mit der Anfrage an das Steuermodul geschickt wird. Diese SMS oder MMS kann dann auch vom Steuermodul ausgewertet werden und die gewünschten erzeugten Bilddaten dann an den Absender der SMS oder MMS zurückgesendet werden, beispielsweise an die Teilnehmer- oder Telefonummer des Absenders.

Gemäß einer Ausführungsform der Erfindung ist das Steuermodul dazu ausgeführt, die Bilddaten nach dem Auftreten eines internen Ereignisses im Feldgerät zu erzeugen und zu senden. Bei diesem sog. Push-Betrieb des Steuermoduls werden die Bilddaten automatisch beim Auftreten bestimmter interner Ereignisse erzeugt und versendet.

Hierzu kann beispielsweise im Steuermodul eine Tabelle enthalten sein, zu welchen internen Ereignissen an welche Nachrichtenempfänger (beispielsweise eine Liste von E-Mailadressen und/oder Telefonnummern) welche Art von Grafiken gesendet werden sollen. Interne Ereignisse können dabei bestimmte Zeiten sein, zu denen beispielsweise ein Zeitgeber oder ein Uhrmodul des Steuermoduls ein Ereignis auslöst. Interne Ereignisse können aber auch dadurch ausgelöst werden, dass beispielsweise ein neuer Messwert aufgenommen wurde, ein Messwert aufgenommen wurde, der sich vom vorhergehenden Messwert unterscheidet, ein bestimmter Messwert erreicht wurde, oder dass beispielsweise ein Fehler im Steuermodul oder in einem Messgerät aufgetreten ist, d. h., dass beispielsweise bestimmte Diagnosedaten bestimmte Werte angenommen haben.

Gemäß einer Ausführungsform der Erfindung ist das Bildverarbeitungsmodul auch dazu ausgeführt, Bilddaten in verschiedenen Formaten zu erzeugen. Beispielsweise kann das Bildverarbeitungsmodul nicht nur Bilder eines Standardformats, sondern verschiedener Standardformate erzeugen. Beispielsweise könnte eine E-Mail oder eine MMS-Nachricht nicht nur ein Bild in einem Format, sondern in einer Mehrzahl von Formaten umfassen, um sicherzustellen, dass das Empfangsgerät wenigstens eines der Bilder darstellen kann.

Gemäß einer Ausführungsform der Erfindung ist das Steuermodul dazu ausgeführt, ein Format für die Bilddaten zu wählen. Die Wahl des Formats kann dann z. B. über eine Voreinstellung im Steuermodul oder über die Anforderung des Empfangsgeräts für eine bestimmte Grafik erfolgen.

Das Feldgerät umfasst ein Steuermodul, das dazu ausgeführt ist, Prozessdaten von einem Messgerät zu empfangen. Dieses Messgerät ist Bestandteil des Feldgeräts. Prozessdaten können dabei rohe Messdaten, wie beispielsweise Radarechodaten, vorverarbeitete Messdaten aber auch Diagnosedaten des Feldgeräts und des Messgeräts sein. Das Steuermodul kann auch das Steuermodul einen Messgeräts sein und beispielsweise mit dem Messgerät zusammen in einem gemeinsamen Gehäuse angeordnet sein.

Beispielsweise ist das Messgerät ein Füllstandradar, beispielsweise zum Bestimmen des Füllstands eines Tanks.

Ein weiterer Aspekt der Erfindung betrifft ein Prozessüberwachungssystem.

Gemäß einer Ausführungsform der Erfindung umfasst das

Prozessüberwachungssystem ein Feldgerät, so wie es im Vorstehenden und im Nachfolgenden beschrieben ist.

Gemäß einer Ausführungsform der Erfindung umfasst das Prozessüberwachungssystem ein Kommunikationsnetzwerk und ein Empfangsgerät mit einem Anzeigegerät, wobei das Feldgerät dazu ausgeführt ist, die Bilddaten über das Kommunikationsnetzwerk an das Empfangsgerät zu senden und das Empfangsgerät dazu ausgeführt ist, die Bilddaten über das Kommunikationsnetzwerk zu empfangen und auf dem Anzeigegerät darzustellen.

Das Kommunikationsnetzwerk kann dabei ein kabelgebundenes Kommunikationsnetzwerk sein, kann aber auch ein Funknetzwerk sein. Zu denken ist beispielsweise an das Internet, an eine Ethernetverbindung, an ein Feldbussystem, an ein Mobilfunknetzwerk und ähnliche Kommunikationsnetzwerke.

Wie bereits gesagt, kann das Empfangsgerät ein Rechner, beispielsweise ein Laptop, oder auch ein tragbares Gerät, wie ein Mobiltelefon oder ein PDA, sein. Das Anzeigegerät kann ein Bildschirm oder eine integrierte Anzeige, wie z. B. ein LCD-Bildschirm, sein.

Zur Kommunikation und zur Identifizierung innerhalb des Kommunikationsnetzwerkes können das Feldgerät und das Empfangsgerät entsprechende Identifizierungsadressen, wie beispielsweise eine IP-Adresse, eine E-Mail-Adresse, eine Teilnehmernummer (Telefonnummer) aufweisen. Insgesamt kann das Kommunikationsnetzwerk zur gesamten Kommunikation zwischen Feldgerät und Empfangsgerät verwendet werden. D. h., dass einerseits die Anfragen des Empfangsgeräts über das Kommunikationsnetzwerk an das Feldgerät geschickt werden und umgekehrt, dass die Nachrichten mit den Bilddaten vom Feldgerät an das Empfangsgerät zurückgeschickt bzw. abgeschickt werden.

Gemäß einer Ausführungsform der Erfindung ist das Empfangsgerät dazu ausgeführt, die Bilddaten mit Standardfunktionen zu empfangen und zu verarbeiten.

Standardfunktionen können dabei Funktionen bzw. Programme sein, die nicht an das Feldgerät angepasst wurden, oder die bereits auf dem Gerät im Standardfunktionsumfang vorhanden sind. Beispielsweise weisen Rechner, PDAs, Mobiltelefone, Laptops und ähnliche Geräte in der Regel einen vorinstallierten E-Mail-Client, Bildanzeigeprogramme und meistens auch MMS-Empfangsmodule auf, falls sie dazu ausgeführt sind, über ein mobiles Funknetz zu kommunizieren.

Ein weiterer Aspekt der Erfindung betrifft ein Verfahren zum Steuern eines Feldgeräts.

Es ist zu verstehen, dass die im Vorstehenden und Nachstehenden beschriebenen Verfahrensschritte, die in Bezug auf das Steuermodul, das Feldgerät oder das Prozessüberwachungssystem beschrieben werden, Ausführungsformen des Verfahrens sein können. Umgekehrt ist es auch möglich, dass das Steuermodul, das Feldgerät und/oder das Prozessüberwachungssystem dazu ausgeführt sind, die im Vorstehenden und Nachfolgenden beschriebenen Verfahrensschritte auszuführen.

Gemäß einer Ausführungsform der Erfindung umfasst das Verfahren die Schritte: Erzeugen von Bilddaten aus Prozessdaten des Feldgeräts mit einem Steuermodul des Feldgeräts; Senden der Bilddaten an ein Empfangsgerät.

Gemäß einer Ausführungsform der Erfindung umfasst das Verfahren auch einen oder mehrere der folgenden Schritte: Empfangen von Messdaten von einem Messgerät; Erzeugen von Prozessdaten, beispielsweise Verarbeiten oder Berechnen der Messdaten aus Rohdaten, Abruf von Diagnosedaten; Empfangen einer Anforderung für Bilddaten; Erzeugen von Bilddaten nach Auslösen eines internen Ereignisses im Steuermodul bzw. Feldgerät.

Gemäß einer Ausführungsform der Erfindung können Prozessdaten, wie Messwerte, Echokurven oder sonstige Diagnosedaten von einem Feldgerät versendet werden, die in einem Empfangsgerät oder Zielsystem ohne erforderliche Aufbereitung durch Standardanzeigeverfahren dargestellt werden können.

Darüber hinaus ist es möglich, dass die in einem Feldgerät anfallenden Prozessdaten auch digital an ein Empfangsgerät oder Zielsystem übertragen werden können. Hierbei werden die Werte beispielsweise als eine Vielzahl von Fließkommazahlen übertragen. Diese Fließkommazahlen werden dann in Empfangsgeräten, die Kenntnis über den Inhalt der Fließkommazahlen haben, aufbereitet, beispielsweise um die Daten grafisch darzustellen. Wenn jedoch Daten bereits vom Feldgerät grafisch aufbereitet werden, muss das Empfangsgerät zur Visualisierung keinerlei Informationen über die Art der Daten haben.

Weitere Aspekte der Erfindung sind ein Programmelement und ein computerlesbares Medium, auf dem das Programmelement gespeichert ist.

Das Programmelement oder auch Computerprogramm ist dazu ausgeführt, einen oder mehrere Prozessoren dazu anzuleiten, die Schritte des Verfahrens zum Steuern eines Feldgeräts, so wie im Vorstehenden und im Nachfolgenden beschrieben, durchzuführen.

Beispielsweise kann das Feldgerät einen Prozessor aufweisen, auf dem unter anderem das Betriebssystem des Feldgeräts ausgeführt wird. Das Programmelement kann dabei ein Softwaremodul sein, das im Feldgerät gespeichert ist, und vom Prozessor des Feldgeräts ausgeführt werden kann.

Darüber hinaus wird in der Regel das Empfangsgerät einen weiteren Prozessor aufweisen, der beispielsweise das Betriebssystem des Empfangsgeräts ausführt und der auch dazu geeignet ist weitere Standardfunktionen bzw. im Empfangsgerät gespeicherte Standardsoftwaremodule auszuführen, die das Empfangen, Senden und Verarbeiten der Bilddaten betreffen.

Insgesamt ist zu verstehen, dass die beschriebenen Module, wie beispielsweise das Steuermodul, das Sendemodul, ein Empfangsmodul des Empfangsgeräts, das Messmodul und/oder das Bildverarbeitungsmodul als programmierte Softwaremodule oder Funktionen implementiert sein können. Es ist jedoch möglich, dass diese funktionalen Module auch teilweise oder vollständig als Hardware implementiert sind.

In dem computerlesbaren Medium bzw. Computerprogrammprodukt ist ein Programmelement gespeichert, das, wenn es auf einem oder mehreren Prozessoren ausgeführt wird, den oder die Prozessoren anleitet, die Schritte des Verfahrens zum Steuern des Feldgeräts so wie es im Vorstehenden und im Nachfolgenden beschrieben ist, durchzuführen.

Ein computerlesbares Medium kann dabei eine Diskette, eine Harddisk, ein USB-Speichergerät, ein RAM, ein ROM oder ein EPROM sein. Ein computerlesbares Medium kann auch ein Datenkommunikationsnetzwerk, wie beispielsweise das Internet, das den Download eines Programmcodes ermöglicht, sein.

Im Folgenden werden Ausführungsbeispiele der Erfindung mit Bezug auf die beiliegenden Figuren detailliert beschrieben.

### KURZE BESCHREIBUNG DER FIGUREN

**Fig. 1** zeigt schematisch ein Prozessüberwachungssystem gemäß einem Ausführungsbeispiel der Erfindung.
**Fig. 2** zeigt schematisch ein Prozessüberwachungssystem gemäß einem Ausführungsbeispiel der Erfindung.
**Fig. 3** zeigt eine Grafik in der Form eines Diagramms.
**Fig. 4** zeigt eine Grafik in der Form einer Tabelle.
**Fig. 5** zeigt ein Flussdiagramm für ein Steuerverfahren gemäß einem Ausführungsbeispiel der Erfindung.

Die in den Figuren verwendeten Bezugszeichen und ihre Bedeutung sind in zusammenfassender Form in der Liste der Bezugszeichen aufgeführt. Grundsätzlich sind identische oder ähnliche Teile mit den gleichen Bezugszeichen versehen.

### DETAILIERTE BESCHREIBUNG VON AUSFÜHRUNGSBEISPIELEN

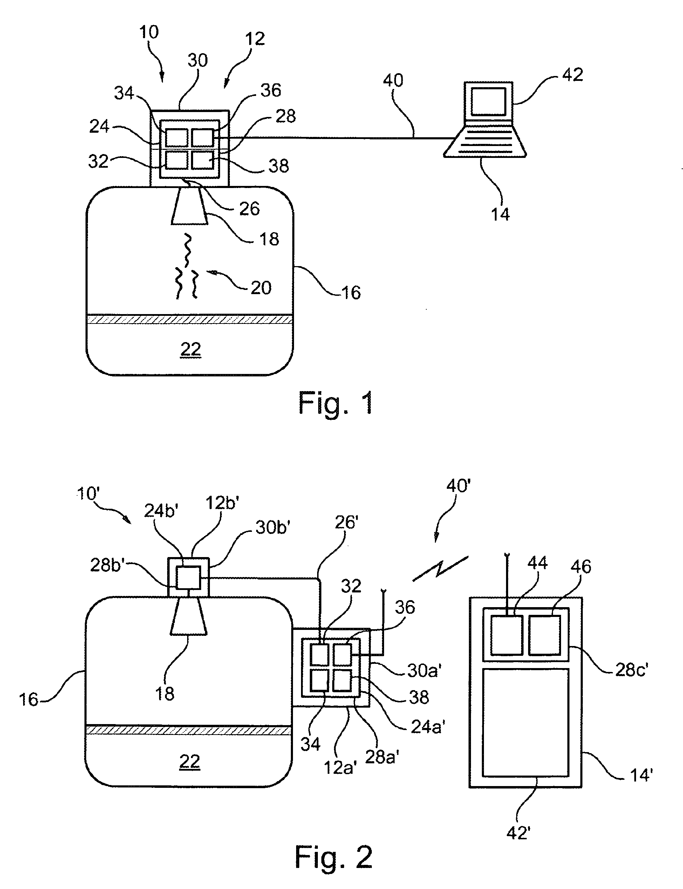

Fig. 1 zeigt schematisch ein Ausführungsbeispiel eines Prozessüberwachungssystems 10 mit einem Feldgerät 12 und einem Empfangsgerät 14 in der Form eines Rechners 14. Das Prozessüberwachungssystem 10 dient zum Überwachen einer technischen Anlage mit einem Tank 16. Das Feldgerät 12 dient zum Überwachen des Füllstands einer Flüssigkeit 22 im Tank 16. Dazu umfasst das Feldgerät 12 ein Füllstandradar bzw. Messgerät 18, das Radarstrahlen 20 aussendet, die an der Oberfläche der Flüssigkeit 22 reflektiert werden und als Radarecho 20 wieder beim Füllstandradar 18 angelangen und dann vom Feldgerät 12 ausgewertet werden.

Dazu ist das Füllstandradar 18 mit einem Steuermodul 24 des Feldgeräts 12 über eine Kommunikationsleitung 26 verbunden. Das Steuermodul 24, das beispielsweise eine Platine 24 in einem Gehäuse 30 des Feldgeräts 12 sein kann, weist einen Prozessor 28 auf, auf dem eine Mehrzahl von Modulen 32, 34, 36, 38 ausführbar sind. Es ist jedoch auch möglich, dass die Module 32 bis 38 als Hardware implementiert sind oder auf jeweils einem Prozessor oder verschiedenen Prozessoren des Feldgeräts 12 ausgeführt werden.

Das Steuermodul 24 umfasst ein Messmodul 32, das über die Kommunikationsleitung 26 mit dem Füllstandradar 18 kommunizieren kann, um das Füllstandradar 18 zu steuern und Messdaten davon abzufragen. Das Steuermodul 32 ist dazu ausgeführt, eine Echokurve des Radarechos 20 über die Kommunikationsleitung 26 zu empfangen und daraus über eine Laufzeitbestimmung den aktuellen Füllstand im Tank 16 als Messwert zu bestimmen.

Das Steuermodul 24 weist darüber hinaus ein Diagnosemodul 38 auf, das dazu ausgeführt ist, Selbsttests des Steuermoduls 24 auszuführen und auch die Funktionsweise des Füllstandradars 18 zu überwachen. Dazu sammelt das Diagnosemodul 38 Diagnosedaten.

Das Steuermodul 24 weist darüber hinaus ein Bildverarbeitungsmodul 34 auf, das in der Lage ist, aus im Feldgerät 12 anfallenden Prozessdaten, wie beispielsweise Rohmessdaten, einer Echokurve, die vom Messmodul 32 berechneten Messwerte oder Diagnosedaten des Diagnosemoduls 38, eine Grafik, zu kodieren bzw. aus diesen Daten eine Grafik zu erzeugen.

Das Steuermodul 24 weist darüber hinaus ein Sendemodul 36 auf, das mit dem Empfangsgerät 14 über die Leitung 40 bzw. das Kommunikationsnetzwerk 40 kommunizieren kann. Beispielsweise umfasst das Sendemodul 36 einen Internet-Client mit einem E-Mail-Client. Das Sendemodul 36 kann dann die vom Bildverarbeitungsmodul 34 erzeugten Bilddaten als Datei in den Anhang einer E-Mail kodieren bzw. eine E-Mail mit den Bilddaten des Bildverarbeitungsmoduls 34 als Anhang erzeugen und diese E-Mail dann über das Internet 40 an den Rechner 14 schicken. Auf dem Rechner 14 ist Standardsoftware installiert, die in der Lage ist, die E-Mail zu empfangen, den Anhang der E-Mail zu entpacken und die darin gespeicherten Bilddaten in Form einer Datei auf dem Rechner 14 zu speichern und auf dem Bildschirm 42 des Rechners 14 anzuzeigen.

Die Fig. 2 zeigt schematisch ein weiteres Ausführungsbeispiel eines Prozessüberwachungssystems 10'. Das Prozessüberwachungssystem 10' umfasst ein Feldgerät 12a', das über eine Kommunikationsleitung 26', beispielsweise einen Feldbus 26', mit einem weiteren zweiten Feldgerät 12b' verbunden ist. Das Feldgerät 12b' umfasst ein Füllstandradar 18, das genauso wie das Füllstandradar 18 aus der Fig. 1 den Füllstand einer Flüssigkeit 22 in einem Tank 16 überwacht. Das Feldgerät 12b' weist ein Steuermodul 24b' auf, das dazu ausgeführt ist, das Füllstandradar 18 anzusteuern.

Das Feldgerät 12a', das genauso wie das Feldgerät 12 aufgebaut sein kann, jedoch bei der in der Fig. 2 gezeigten Anordnung aber anders konfiguriert sein kann, weist ein Steuermodul 24a' auf, das mit seinem Messmodul 32' über die Kommunikationsleitung 26' das Steuermodul 24b' des Feldgeräts 12b' ansteuern kann und auch von dem Feldgerät 12b' Messrohdaten und daraus berechnete abgeleitete Messdaten empfangen kann.

Genauso wie das Feldgerät 12 aus der Fig. 1 weist das Feldgerät 12a' bzw. dessen Steuermodul 24a' ein Bildverarbeitungsmodul 34, ein Diagnosemodul 38 und ein Sendemodul 36 auf.

Das Sendemodul 36 umfasst ein Mobiltelefon, das über ein mobiles Funknetzwerk 40' mit einem Empfangsgerät 14' in der Form eines Mobiltelefons 14' kommunizieren kann. Wenn das Bildverarbeitungsmodul 34 eine Grafik bzw. Bilddaten mit Prozessdaten des Feldgeräts 12a' erzeugt hat, kodiert das Sendemodul 36 diese Bilddaten in eine MMS und schickt diesen an das Mobiltelefon 14'. Das Mobiltelefon 14' umfasst Standardsoftware in der Form eines Empfangsmoduls 44, das dazu ausgeführt ist, über das Funknetzwerk 40' eine MMS zu empfangen, und eines Anzeigemoduls 46', das dazu ausgeführt ist, die vom Feldgerät 12a' erzeugten Bilddaten zu interpretieren und auf einer Anzeige 42' des Mobiltelefons 14' anzuzeigen.

Bei der in der Fig. 2 gezeigten Anordnung umfasst das Feldgerät 12a' ein Steuermodul 24a', das in einem Gehäuse 30a räumlich entfernt von einem Gehäuse 30b' des Feldgeräts 12b' angeordnet ist. Darüber hinaus weisen das Feldgerät 12a' einen Prozessor 28a' des Steuermoduls 24a', das Feldgerät 12b' einen Prozessor 28b' des Feldgeräts 12b' und das Mobiltelefon 14' einen weiteren Prozessor 28c' auf, die dazu geeignet sind, die jeweiligen auf dem Gerät installierten Module auszuführen.

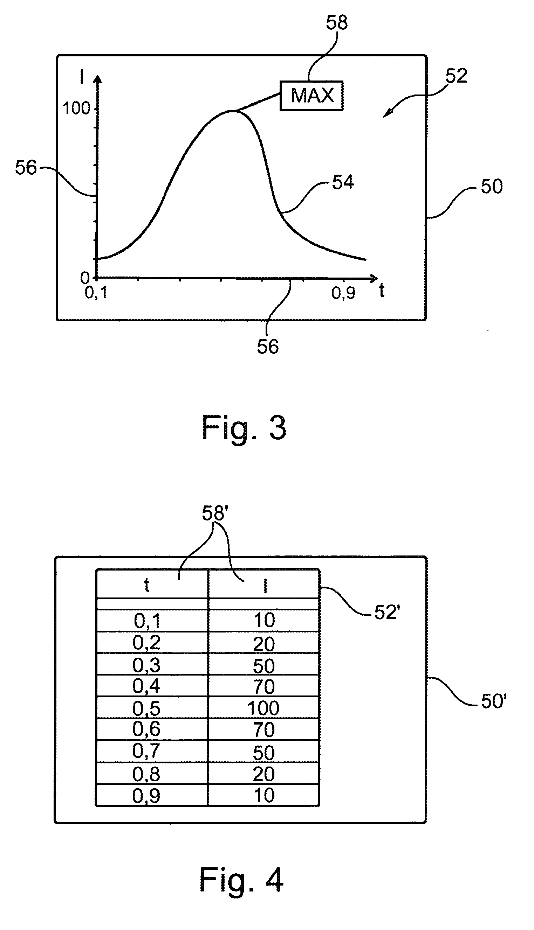

Die Fig. 3 zeigt eine Grafik 50 mit einem Diagramm 52, so wie sie von dem Bildverarbeitungsmodul 34 erzeugt werden kann. Es ist zu verstehen, dass das Bildverarbeitungsmodul 34 keine Grafik 50 erzeugt, die direkt von einem Menschen angesehen werden kann, sondern dass das Bildverarbeitungsmodul 34 digitale Bilddaten, beispielsweise in der Form einer Datei, erzeugt, die dann von einem Anzeigemodul 46 interpretiert und von einer Anzeige 42, 42' dann angezeigt werden können, so dass für einen Menschen die Grafik 50 sichtbar wird. Die Bilddaten können dabei beispielsweise im JPG-, BMP-, TIFF-, GIF- oder PNG-Format gespeichert sein.

Das Diagramm 52 umfasst eine Radarechokurve 54 und weitere zusätzliche Informationen, wie zwei Achsen 56, die mit einem Maßstab beschriftet sind und einer Markierung oder Label 58. Diese zusätzlichen Informationen, die auch der Interpretation der Radarechokurve 54 dienen können, sind auch im Bildverarbeitungsmodul 34 gespeichert.

Die Fig. 4 zeigt eine weitere Grafik 50', die vom Bildverarbeitungsmodul 34 erzeugt werden kann. Die Grafik 50' umfasst eine Tabelle 52', die beispielsweise einen Teil der Werte der Radarechokurve 54 aus der Fig. 3 enthalten kann. Die Tabelle 52 umfasst dabei neben den Zahlwerten zusätzliche Elemente, wie beispielsweise Trennlinien und Spaltenbeschriftungen 58'.

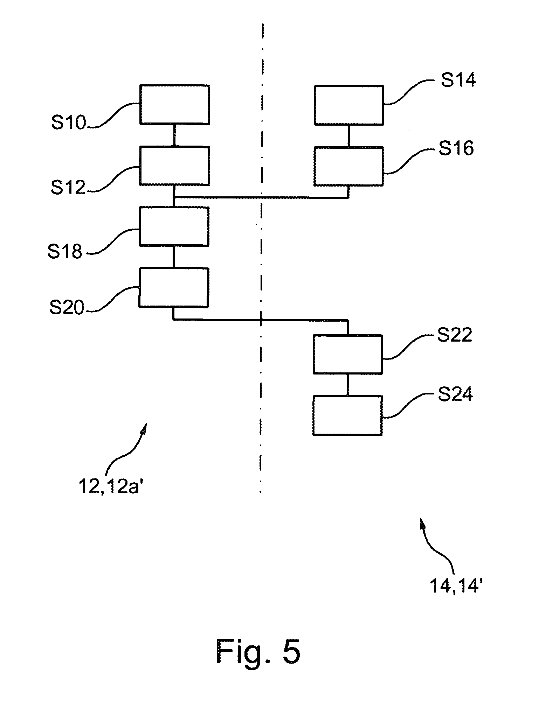

Die Fig. 5 zeigt ein Flussdiagramm für ein Verfahren, das von einem Feldgerät 12 bzw. 12a' zusammen mit einem Empfangsgerät 14 bzw. 14' ausgeführt werden kann. Die Verfahrensschritte auf der linken Seite des Diagramms werden dabei von dem Feldgerät 12 bzw. 12a' ausgeführt, die Verfahrensschritte auf der rechten Seite von dem Empfangsgerät 14 bzw. 14'.

In einem Schritt S10 tritt ein internes Ereignis im Feldgerät 12, 12a' auf. Beispielsweise könnte ein Fehler im Gerät 18 oder im Feldgerät 12b' aufgetreten sein, das Diagnosemodul 38 könnte Diagnosedaten ermittelt haben, die einen bestimmten Schwellwert überschreiten oder ein Timer bzw. Zeitgeber innerhalb des Feldgeräts 12, 12a' könnte abgelaufen sein oder eine bestimmte Uhrzeit könnte erreicht sein.

Ist ein internes Ereignis eingetreten, das eine erneute Messung auslöst, kann in einem optionalen Schritt S12 das Feldgerät 12, 12a' das Messgerät 18 anweisen, Messrohdaten zu ermitteln oder einen Messwert zu berechnen.

Nachdem ein internes Ereignis ausgelöst wurde, dass das Erzeugen von Bilddaten bewirken soll, ermittelt das Bildverarbeitungsmodul 34 die zum Erzeugen der entsprechenden Grafik benötigten Prozessdaten und erzeugt zusammen mit den zusätzlichen Daten, die im Bildverarbeitungsmodul 34 vorhanden sind, Bilddaten. Dabei ist es möglich, dass das Bildverarbeitungsmodul 34 auch mehrere Grafiken erzeugt, beispielsweise die Grafik aus der Fig. 3 in mehreren Standardformaten und/oder die Grafik der Fig. 4 in diesen Standardformaten.

Alternativ oder zusätzlich kann nicht nur ein internes Ereignis des Feldgeräts das Erzeugen von Bilddaten auslösen, sondern auch ein externes Ereignis, wie eine Anfrage eines Empfangsgeräts 14 bzw. 14'.

Dazu kann beispielsweise ein Benutzer des Rechners 14 oder des Mobiltelefons 14' eine Anfrage an das Feldgerät 12, 12a' erzeugen. Dabei ist denkbar, dass ein Rechner 14 eigenständig diese E-Mail erzeugt, beispielsweise wenn ein internes Ereignis im Rechner 14 aufgetreten ist, dass ein Benutzer eine E-Mail mit einem Code an das Feldgerät 12, 12a' schickt, oder dass ein Benutzer des Mobiltelefons 14' eine SMS mit einem entsprechenden Code an das Feldgerät 12, 12a' schickt.

In einem Schritt S16 sendet das Empfangsgerät 14, 14' mit einem Sende/Empfangsmodul 44 die E-Mail oder die SMS bzw. im Allgemeinen eine Nachricht mit der Anfrage an das Feldgerät 12, 12a', das wiederum diese Nachricht mit einem Sende/Empfangsmodul 32 empfängt.

In Reaktion auf die Anfrage, analog wie in Reaktion auf ein internes Ereignis erzeugt dann das Feldgerät 12, 12a' die Bilddaten im Schritt S 18.

Sind die Bilddaten erzeugt, werden diese in eine MMS oder eine E-Mail kodiert. Dann sendet das Feldgerät 12, 12a' diese Nachricht an das Empfangsgerät 14, 14'. Bei einem internen Ereignis kann das dadurch geschehen, dass im Feldgerät 12, 12a' gespeichert ist, an welches Empfangsgerät 14, 14' die entsprechende Nachricht geschickt werden soll. Bei einem externen Ereignis bzw. einer Anfrage kann dies dadurch geschehen, dass das Feldgerät 12, 12a' den Sender der E-Mail (beispielsweise über dessen E-Mail-Adresse) oder der MMS (beispielsweise über dessen Telefonnummer) ermittelt und die Nachricht mit den Bilddaten dann an die entsprechende E-Mail-Adresse bzw. Telefonnummer versendet.

In einem Schritt S22 empfängt das Empfangsgerät 14, 14' die Nachricht und entpackt diese. Die in einem Standardformat gespeicherten Bilddaten können dann beispielsweise mit einem E-Mail-Client bzw. mit der entsprechenden Standardsoftware auf einem Bildtelefon als Datei gespeichert werden, die in einem Schritt S24 von der entsprechender Anzeigesoftware 46 dann auf einem Bildschirm 42 oder eine Anzeige 42 dargestellt werden können.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### LISTE DER BEZUGSZEICHEN

- 10: Prozessüberwachungssystem
- 12: Feldgerät
- 14: Empfangsgerät (Rechner)
- 16: Tank
- 18: Füllstandsradar
- 20: Radarstrahlen
- 22: Flüssigkeit
- 24: Steuermodul
- 26: Kommunikationsleitung
- 28: Prozessor
- 30: Gehäuse
- 32: Messmodul
- 34: Bildverarbeitungsmodul
- 36: Sendemodul
- 38: Diagnosemodul
- 40: Datenleitung (Netzwerk)
- 42: Bildschirm

- 10': Prozessüberwachungssystem
- 12a': Feldgerät
- 12b': Feldgerät
- 14': Mobiltelefon
- 24a': Steuermodul
- 24b': Steuermodul
- 26': Feldbus
- 28a': Prozessor
- 28b': Prozessor
- 28c': Prozessor
- 30a': Gehäuse
- 30b': Gehäuse
- 40': Funknetzwerk
- 42': Anzeige
- 44: Empfangsmodul
- 46: Anzeigemodul

- 50: Grafik
- 52: Diagramm
- 54: Radarechokurve
- 56: Achsen
- 58: Label
- 50': Grafik
- 52': Tabelle
- 58': Beschriftung

## Patentansprüche

1. Feldgerät (12), umfassend:
ein Steuermodul (24),
ein Messgerät (18),
ein Bildverarbeitungsmodul (34),
ein Sendemodul (36),
wobei das Steuermodul (24) dazu ausgeführt ist, das Messgerät (18) anzusteuern und Prozessdaten von dem Messgerät (18) zu empfangen,
wobei das Bildverarbeitungsmodul (34) dazu ausgeführt ist, aus den in Zahlenform vorliegenden Prozessdaten Pixelinformationen aufweisende Bilddaten zu erzeugen, die eine Grafik und/oder eine Tabelle umfassen,
wobei das Sendemodul (36) dazu ausgeführt ist, die Bilddaten in eine E-Mail zu kodieren,
wobei das Sendemodul (36) einen Internet-Client umfasst,
wobei das Sendemodul (36) dazu ausgeführt ist, die E-Mail mittels des Internet-Clients zu versenden.

2. Feldgerät (12) nach Anspruch 1,
wobei die Prozessdaten einen Messwert, eine Echokurve und/oder Diagnosedaten umfassen.

3. Feldgerät (12) nach Anspruch 1 oder 2,
wobei das Bildverarbeitungsmodul (34) dazu ausgeführt ist, die Bilddaten in einem Standardformat zu erzeugen.

4. Feldgerät (12) nach einem der vorhergehenden Ansprüche,
wobei die Grafik eine Tabelle (52') darstellt.

5. Feldgerät (12) nach einem der vorhergehenden Ansprüche,
wobei das Bildverarbeitungsmodul (34) dazu ausgeführt ist, Bilddaten mit einer Auflösung zu erzeugen, die für ein Empfangsgerät optimiert ist.

6. Feldgerät (12) nach einem der vorhergehenden Ansprüche,
wobei das Sendemodul (36) einen Sender für ein mobiles Funknetz umfasst,
wobei das Sendemodul (36) dazu ausgeführt ist, die Bilddaten in eine Nachricht zu kodieren,
wobei das Sendemodul (36) dazu ausgeführt ist, die Nachricht zu versenden.

7. Feldgerät (12) nach einem der vorhergehenden Ansprüche,
wobei das Steuermodul (24) dazu ausgeführt ist, die Bilddaten auf Anforderung eines Empfangsgeräts (14) zu erzeugen und zu senden.

8. Feldgerät (12) nach einem der vorhergehenden Ansprüche,
wobei das Steuermodul (24) dazu ausgeführt ist, die Bilddaten nach dem Auftreten eines internen Ereignisses im Feldgerät (12) zu erzeugen und zu senden.

9. Prozessüberwachungssystem (10), umfassend:
ein Feldgerät (12) nach einem der vorhergehenden Ansprüche,
ein Kommunikationsnetzwerk (26),
ein Empfangsgerät (14) mit einem Anzeigegerät (42),
wobei das Feldgerät dazu ausgeführt ist, die Bilddaten über das Kommunikationsnetzwerk (26) an das Empfangsgerät (14) zu senden,
wobei das Empfangsgerät (14) dazu ausgeführt ist, die Bilddaten über das Kommunikationsnetzwerk (26) zu empfangen und auf dem Anzeigegerät (42) darzustellen.

10. Verfahren zum Steuern eines Feldgeräts (12), das Verfahren umfassend die Schritte:
Ansteuern eines Messgeräts (18) des Feldgeräts (12) mit einem Steuermodul (24) des Feldgeräts (12);
Empfangen von Prozessdaten des Messgeräts (18) mit dem Steuermodul (24);
Erzeugen von Pixelinformationen aufweisende Bilddaten aus den in Zahlenform vorliegenden Prozessdaten mit einem Bildverarbeitungsmodul (34) des Feldgeräts (12), wobei die Bilddaten eine Grafik und/oder eine Tabelle umfassen;
Kodieren der Bilddaten in eine E-Mail mit einem Sendemodul (36) des Steuermoduls (24);
Senden der E-Mail mit dem Sendemodul (36) an ein Empfangsgerät (14) mit einem Internet-Client des Sendemoduls (36).

11. Programmelement, das, wenn es auf einem Prozessor ausgeführt wird, den Prozessor anleitet, die Schritte des Verfahrens nach Anspruch 10 durchzuführen.

12. Computerlesbares Medium, auf dem ein Programmelement gespeichert ist, das, wenn es auf einem Prozessor ausgeführt wird, den Prozessor anleitet, die Schritte des Verfahrens nach Anspruch 10 durchzuführen.

## Claims

1. A field device (12) comprising:
a control module (24),
a measuring device (18),
an image processing module (34),
a transmission module (36),
wherein the control module (24) is designed to control the measuring device (18) and to receive process data from the measuring device (18),
wherein the image processing module (34) is designed to generate image data comprising pixel information, which image data comprises a diagram and/or a table, from the process data that is present in numeric form,
wherein the transmission module (36) is designed to encode the image data in an e-mail,
wherein the transmission module (36) comprises an internet client,
wherein the transmission module (36) is designed to send the e-mail by means of the internet client.

2. The field device (12) of claim 1,
wherein the process data comprises a measured value, an echo curve and/or diagnostic data.

3. The field device (12) of claim 1 or 2,
wherein the image processing module (34) is designed to generate the image data in a standard format.

4. The field device (12) of any one of the preceding claims,
wherein the diagram shows a table (52').

5. The field device (12) of any one of the preceding claims,
wherein the image processing module (34) is designed to generate image data at a resolution that is optimized for a receiving device.

6. The field device (12) of any one of the preceding claims,
wherein the transmission module (36) comprises a transmitter for a mobile radio network,
wherein the transmission module (36) is designed to encode the image data in a message,
wherein the transmission module (36) is designed to send the message.

7. The field device (12) of any one of the preceding claims,
wherein the control module (24) is designed to generate and send the image data upon request from a receiving device (14).

8. The field device (12) of any one of the preceding claims,
wherein the control module (24) is designed to generate and send the image data after the occurrence of an internal event in the field device (12).

9. A process monitoring system (10), comprising:
a field device (12) of any one of the preceding claims,
a communication network (26),
a receiving device (14) with a display device (42),
wherein the field device is designed to send the image data by way of the communication network (26) to the receiving device (14),
wherein the receiving device (14) is designed to receive the image data by way of the communication network (26) and to display it on the display device (42).

10. A method for controlling a field device (12), with the method comprising the steps of:
controlling a measuring device (18) of the field device (12) with a control module (24) of the field device (12);
receiving process data of the measuring device (18) with the control module (24);
generating image data comprising pixel information from the process data present in numerical form with an image processing module (34) of the field device (12), wherein the image data comprises a diagram and/or a table;
coding the image data in an e-mail with a transmission module (36) of the control module (24);
sending the e-mail with the transmission module (36) to a receiving device (14) with an internet client of the transmission module (36).

11. A program element which when executed on a processor instructs the processor to carry out the steps of the method of claim 10.

12. A computer-readable medium on which a program element is stored which when executed on a processor instructs the processor to carry out the steps of the method of claim 10.

## Revendications

1. Appareil de champ (12), comprenant :
un module de commande (24),
un appareil de mesure (18),
un module de traitement d'images (34),
un module d'émission (36),
le module de commande (24) étant réalisé pour contrôler l'appareil de mesure (18) et pour recevoir des données de processus de l'appareil de mesure (18),
le module de traitement d'images (34) étant réalisé pour générer des données d'images présentant des informations en pixels à partir des données de processus disponibles en forme numérique, lesquelles données d'images comportent un graphique et/ou un tableau,
le module d'émission (36) étant réalisé pour coder les données d'images dans un E-mail,
le module d'émission (36) comprenant un client internet,
le module d'émission (36) étant réalisé pour envoyer l'E-mail au moyen du client internet.

2. Appareil de champ (12) selon la revendication 1, les données de processus comprenant une valeur de mesure, une courbe d'échos et/ou des données de diagnostic.

3. Appareil de champ (12) selon l'une des revendications 1 et 2, le module de traitement d'images (34) étant réalisé pour générer les données d'images dans un format standard.

4. Appareil de champ (12) selon l'une des revendications précédentes, le graphique représentant un tableau (52').

5. Appareil de champ (12) selon l'une des revendications précédentes, le module de traitement d'images (34) étant réalisé pour générer les données d'images avec une définition, optimisée pour un appareil de réception.

6. Appareil de champ (12) selon l'une des revendications précédentes,
le module d'émission (36) comprenant un émetteur pour un réseau mobile de stations de radio,
le module d'émission (36) étant réalisé pour coder les données d'images dans un message,
le module d'émission (36) étant réalisé pour envoyer le message.

7. Appareil de champ (12) selon l'une des revendications précédentes, le module de commande (24) étant réalisé pour générer et envoyer les données d'images sur demande d'un appareil de réception (14).

8. appareil de champ (12) selon l'une des revendications précédentes, le module de commande (24) étant réalisé pour générer et envoyer les données d'images après la survenance d'un événement interne dans l'appareil de champ (12).

9. Système de contrôle de processus (10), comprenant :
un appareil de champ (12) selon l'une des revendications précédentes,
un réseau de communication (26),
un appareil de réception (14) avec un écran (42),
l'appareil de champ étant réalisé pour envoyer les données d'images à l'appareil de réception (14) à travers le réseau de communication (26),
l'appareil de réception (14) étant réalisé pour recevoir les données d'images à travers le réseau de communication (26) et les représenter sur l'écran (42).

10. Procédé de commande d'un appareil de champ (12), le procédé comprenant les étapes :
contrôle d'un appareil de mesure (18) de l'appareil de champ (12) par un module de commande (24) de l'appareil de champ (12) ;
réception de données de processus de l'appareil de mesure (18) par le module de commande (24) ;
génération de données d'images, présentant des informations en pixels, à partir des données de processus disponibles en forme numérique, par un module de traitement d'images (34) de l'appareil de champ (12), les données d'images comprenant un graphique et/ou un tableau ;
codage des données d'images dans un E-mail par un module d'émission (36) du module de commande (24) ;
envoi de l'E-mail par le module d'émission (36) à un appareil de réception (14), par un client internet du module d'émission (36) .

11. Elément de programme qui, lorsqu'il est réalisé sur un processeur, ordonne au processeur de mettre en oeuvre les étapes du procédé selon la revendication 10.

12. Support lisible sur ordinateur, sur lequel est mémorisé un élément de programme qui, lorsqu'il est réalisé sur un processeur, ordonne au processeur de mettre en oeuvre les étapes du procédé selon la revendication 10.
